Europäisches Patentamt

European Patent Office

Office européen des brevets

(11) Veröffentlichungsnummer: **0 385 127**

**A2**

(12) # EUROPÄISCHE PATENTANMELDUNG

(21) Anmeldenummer: 90102134.5

(22) Anmeldetag: 03.02.90

(51) Int. Cl.5: **H04Q 11/04, H04Q 3/00, H04Q 3/545, H04L 12/26**

(30) Priorität: 28.02.89 DE 3906334

(43) Veröffentlichungstag der Anmeldung:
**05.09.90 Patentblatt 90/36**

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**D-7000 Stuttgart 40(DE)**

(84) **DE**

(71) Anmelder: **ALCATEL N.V.**
**Strawinskylaan 341 (World Trade Center)**
**NL-1077 XX Amsterdam(NL)**

(84) **BE CH DK ES FR GB IT LI NL SE AT**

(72) Erfinder: **Kleine-Altekamp, Harald**
**Grünwiesenstrasse 25**
**D-7120 Bietigheim(DE)**

(74) Vertreter: **Kugler, Hermann, Dipl.-Phys. et al**
**Standard Elektrik Lorenz AG Patent- und**
**Lizenzwesen Postfach 30 09 29**
**D-7000 Stuttgart 30(DE)**

(54) **Übertragungsnetz mit schaltbaren Netzknoten.**

(57) Bekannte leitungsgebundene Übertragungsnetze haben Verstärkerstellen, die mit manuell umzuschaltenden Schaltverteilern versehen sind. Neuerdings wird die Forderung gestellt, elektronisch gesteuerte Schaltverteiler, die sich in sogenannten Netzknoten befinden, für das Übertragungsnetz zu schaffen, damit beim Ausfall einer Verbindung sehr schnell ein Ersatzweg geschaltet werden kann. Hierbei besteht einerseits das Problem, die Schaltaufträge mit den geeigneten Informationen in die Netzknoten einzugeben und ein Überprüfen der korrekten Durchschaltung in den Netzknoten zu ermöglichen.

Dies wird erfindungsgemäß dadurch gelöst, daß neben den eigentlichen Schaltaufträgen eine eindeutige Bezeichnung der zu schaltenden Digitalsignal-Verbindung in die Netzknoten eingegeben wird und daß der Quell-Netzknoten diese Bezeichnung an die nachfolgenden Netzknoten weiterleitet, damit diese ihre Schaltung überprüfen können. Andererseits besteht auch das Problem bei auf der Strecke auftretenden Störungen der Digitalsignal-Verbindungen, ein Alarmsignal von dem betroffenen Netzknoten zu erhalten, ohne daß nachfolgende nicht betroffene Netzknoten einen Folgealarm abgeben. Das Problem wird gelöst durch Umwandlung des normalerweise transparent weitergeleiteten AIS-Signals in ein Ersatz-Digitalsignal (EDS) mit genormtem Rahmenaufbau und durch Signalisierung des abgegebenen Alarms mit einem bestimmten Bit dieses Ersatz-Digitalsignals.

FIG.3

EP 0 385 127 A2

Die Erfindung betrifft ein Übertragungsnetz, bei dem in den einzelnen Netzknoten Schaltaufträge ausgeführt und dadurch Digitalsignal-Verbindungen geschaltet werden.

Ein solches Übertragungsnetz ist Gegenstand der älteren Patentanmeldung P 39 02 243. Bei dem dort gezeigten Ausführungsbeispiel der Erfindung beginnt und endet eine Digitalsignal-Verbindung außerhalb der Netzknoten, z.B. in Multiplexern bzw. Demultiplexern.

Eine Digitalsignal-Verbindung, im folgenden mit DSV abgekürzt, kann jedoch auch innerhalb eines Netzknotens gebildet werden. In diesem Falle kann den übrigen Netzknoten nicht ohne weiteres, wie in der älteren Anmeldung vorgesehen, der Eingangsanschluß des Quellen-Netzknotens oder der Ausgangsanschluß des Ziel-Netzknotens mitgeteilt werden. Statt "Anschluß" wird bisweilen, so auch in der obigen Anmeldung, der Ausdruck "Port" verwendet.

Eine eindeutige Bezeichnung dieser DSV mit einer Datensignal-Adressierung, im folgenden mit DS-Adressierung abgekürzt und bisweilen auch als "Kennung" bezeichnet, und damit eine Überprüfung der Schaltung dieser DSV in den nachfolgenden Netzknoten, ist ohne besondere Vorkehrungen nicht möglich.

Es ist die Aufgabe der vorliegenden Erfindung, hierfür eine geeignete Lösung anzugeben.

Ein weiteres Problem bei dem in der älteren Patentanmeldung vorgeschlagenen Übertragungsnetz ist die Unterdrückung von Folgealarmen in Netzknoten bei Ausfall einer Digitalsignal-Verbindung.

Es ist gewünscht, daß in den Schaltverteilern der Netzknoten die Digitalsignale im Hinblick auf das Vorliegen einer Störung überwacht werden, daß ein Ausfall einer DSV von dort der Steuerung des Netzknotens oder einem eventuell vorgesehenen übergeordneten Netzmanagement-Rechner mitgeteilt wird. Der Netzknoten löst daraufhin einen Alarm aus, so daß eine Ersatzschaltung eingerichtet werden kann. Würde nun ein in einem Netzknoten empfangenes Alarmsignal AIS über mehrere Netzknoten transparent weitergeleitet, so müßte zunächst an jedem dieser Netzknoten angenommen werden, daß der DSV-Ausfall in dem unmittelbar vorangegangenen Abschnitt erfolgte. Ohne besondere Maßnahmen würde dann jeder ein AIS empfangender Netzknoten eine Alarmmeldung an seine Steuerung oder den Netzmanagement-Rechner abgeben, und eine regionale Ersatzschaltung könnte nicht durchgeführt werden, da eine regionale Netzmanagement-Station nicht eindeutig erkennen könnte, ob der Fehler tatsächlich in ihrem Zuständigkeitsbereich liegt.

Es ist daher auch Aufgabe der Erfindung, hier Abhilfe zu schaffen.

Die erstere und die letztere Aufgabe werden wie in den Patentansprüchen 1 bzw. 2 angegeben gelöst. Weiterbildungen ergeben sich aus den Unteransprüchen.

Die Erfindungen werden nun anhand der Zeichnungen beispielsweise näher erläutert. Es zeigen:

Fig. 1 ein Beispiel zweier Netzknoten, in denen Digitalsignal-Verbindungen beginnen und enden,

Fig. 2 eine Schaltung einer Digitalsignal-Verbindung durch vier Netzknoten, und

Fig. 3 eine Digitalsignal-Verbindung mit vier Netzknoten mit der erfindungsgemäßen Unterdrük-kung von Folgealarmen bei Ausfall der Verbindung.

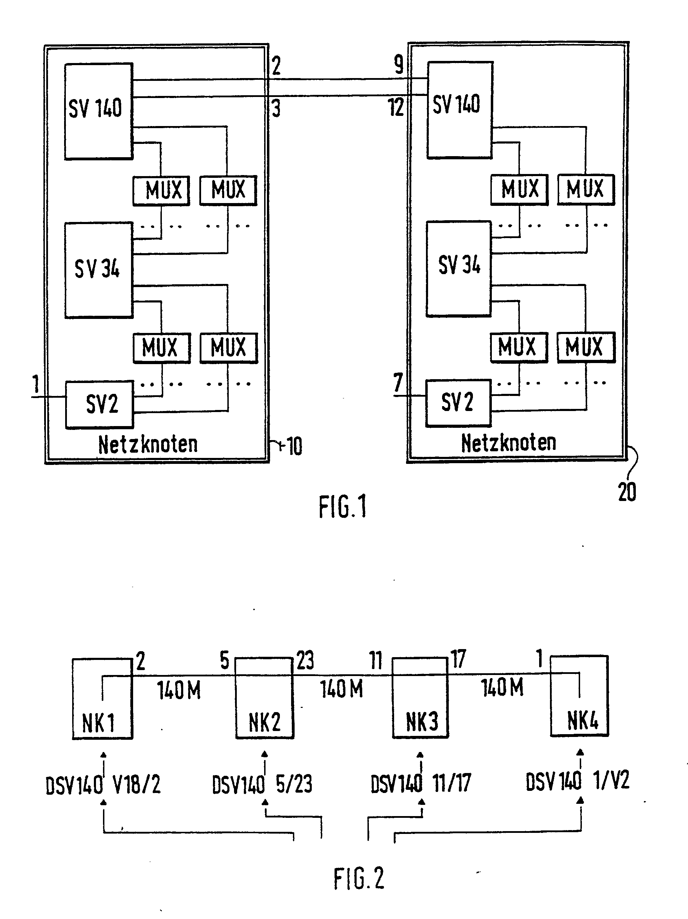

In Fig. 1 ist ein Beispiel von Digitalsignal-Verbindungen gezeigt, die innerhalb von Netzknoten beginnen und enden. Ein Netzknoten, der das Bezugszeichen 10 trägt, und ein Netzknoten, der das Bezugszeichen 20 trägt, haben drei Hierarchieebenen für die verschiedenen Bitfolgefrequenzen der PCM-Hierarchie, nämlich 140 Mbit/s, 34 Mbit/s und 2 Mbit/s. Dementsprechend sind in der Zeichnung Endstellen von Übertragungsstrecken dieser Hierarchieebenen mit SV140, SV34 und SV2 bezeichnet. Für jede der Hierarchieebenen gibt es auch separate Multiplexer. Die Erfindung ist aber auch für anders aufgebaute Netzknoten anwendbar.

Bei dem gezeigten Beispiel beginnt und endet zwar die Digitalsignal-Verbindung mit der Bitfolgefrequenz 2 Mbit/s außerhalb der beiden Netzknoten, jedoch beginnen bzw. enden die 34- bzw. 140-Mbit/s-Digitalsignal-Verbindungen innerhalb der beiden Netzknoten. Zum Beispiel kann die Digitalsignal-Verbindung mit 140 Mbit/s innerhalb des Netzknotens dadurch beginnen, daß der Multiplexer auf irgendeine beliebige Weise aus 34-Mbit/s-Signalen oder 2-Mbit/s-Signalen 140-Mbit/s-Signale bildet. Erhält der Netzknoten 10 einen Schaltauftrag der Form "Schalte die DSV2 von Anschluß 1 in die Lage x einer DSV34 der Lage y der DSV140 an Anschluß 2", so kann innerhalb des Netzknotens 10 ein beliebiger Weg über einen der zur Verfügung stehenden Multiplexer gewählt wer-den.

(Mit "Anschluß" wird jeweils einer der in der Zeichnung numerierten äußeren Anschlüsse der Netzknoten bezeichnet, mit DSV34 die Digitalsignal-Verbindung mit 34 Mbit/s, entsprechend die anderen.)

Die DSV34 ist in diesem Beispiel nicht eindeutig bestimmt. Daher werden erfindungsgemäß für die innerhalb der Netzknoten endenden oder beginnenden DSV-en "virtuelle Anschlüsse" verwendet, damit solche Verbindungen eindeutig bezeichnet werden können. Für die Steuerung des Netzknotens ist es der steuernden Einheit gleichgültig, wie eine solche DSV gebildet wird. Entscheidend ist hierfür nur, daß jede von mehreren DSV-en auf eindeutige Weise und unverwechselbar bezeichnet wird.

Erfindungsgemäß werden nun in den Schaltaufträgen in den geschilderten Fällen "virtuelle Anschluß-Adressen" verwendet. Diese können beliebig gewählt sein, z.B. erhält die erste DSV, die geschaltet wird, die virtuelle Anschluß-Adresse "1", die zweite "2", usw. Der Schaltauftrag zum Netzknoten 1 lautet dann: "Schalte eine DSV34 am virtuellen Anschluß 1 in die Lage y der DSV140 an Anschluß 2".

Die Unterscheidung zwischem virtuellem und reellem Anschluß kann z.B. anhand eines Bits der Anschluß-Adresse erfolgen. Mit diesem Schaltauftrag angesteuert, wählt der Netzknoten einen beliebigen freien internen Weg und ordnet für die Dauer des Schaltauftrags diesem Weg die virtuelle Anschluß-Adresse fest zu. Eine Beschaltung dieser DSV34 mit DSV2-en ist nun möglich, da der Netzknoten und auch ein eventuell vorhandener Netzmanagement-Rechner eine eindeutige Zuordnung zwischen den DSV-en und der DSV34 herstellen kann. Ein Schaltbefehl würde demnach lauten:

"Schalte die DSV2 an Anschluß 1 in die Lage x der DSV34 am virtuellen Anschluß 1".

Wenn diese DSV-en wieder aufgehoben werden, so stehen die Netzknoten-internen Wege wieder zur Verfügung und können beim nächsten Schaltauftrag einer neuen virtuellen Adresse zugeordnet werden.

Erfindungsgemäß werden nicht nur als Anschluß-Adressen auch virtuelle Adressen verwendet, sondern die an die Netzknoten gerichteten Schaltaufträge enthalten neben dem eigentlichen Schaltbefehl auch eine eindeutige Bezeichnung der zu schaltenden DSV. Damit ist eine netzweite Überprüfung der korrekten Schaltung möglich, indem jeder Netzknoten diese Bezeichnung, den sogenannten "DSV-Namen", den er, wie in der vorliegenden Anmeldung beschrieben, als Bezeichnung der DSV von den vorausgehenden Netzknoten empfängt, mit dem DSV-Namen, die er mit den jeweiligen Schaltaufträgen von der ihn steuernden Einrichtung erhalten hat, vergleicht.

Die Bezeichnung einer DSV, der DSV-Name, geschieht durch die Angabe der Quelle und Senke des Digitalsignals, eventuell unter Verwendung von virtuellen Anschlüssen.

Wird eine DSV innerhalb eines Netzknotens gebildet oder aufgelöst, so bezeichnet die virtuelle Anschluß-Adresse den Anfang bzw. das Ende dieser DSV. Das Schalten der DSV wird anhand der Fig. 2 gezeigt. Bei diesem Beispiel handelt es sich um die Schaltung einer DSV140 über vier Netzknoten NK1, NK2, NK3 und NK4, wobei die DSV140 in den Netzknoten NK1 und NK4 beginnt bzw. endet. (Eine entsprechende DSV gibt es auch für die Übertragung in Gegenrichtung. Sie wird hier aber gesondert nicht betrachtet, da die Erfindung auch für sie in gleicher Weise gilt.)

Als virtuelle Anschluß-Adresse ist im Netzknoten NK1 die Adresse 18 und im Netzknoten NK4 die Adresse 2 gewählt. Die Quelle und Senke des 140-Mbit/s-Digitalsignals ist daher als V18 bzw. V2 bezeichnet. Somit ist der Name der DSV: NK1/V18/NK4/V2.

Mit einem Schaltauftrag, der von einer Bedienungsstation oder von einem eventuell vorhandenenen Netzmanagement-Rechner an einen Netzknoten gerichtet wird, erhält dieser Netzknoten den Namen der zu schaltenden DSV. Der Schaltauftrag an den Netzknoten NK1 lautet also z.B.:

"Schalte eine DSV140 mit dem Namen NK1/V18/NK4/V2 von Anschluß V18 nach Anschluß 2".

Der entsprechende Schaltauftrag an den Netzknoten NK2 lautet:

"Schalte eine DSV140 mit dem Namen NK1/V18/NK4/V2 von Anschluß 5 nach Anschluß 23".

Entsprechende Schaltaufträge gehen für diese DSV140 an die Netzknoten NK3 und NK4.

Nach Erhalt seines Schaltauftrags sendet der Netzknoten NK1 eine sogenannte Datensignal-Adressierung (auch Kennung genannt), im folgenden mit DS-Adressierung abgekürzt, mit folgendem Inhalt in Richtung Netzknoten NK4:

"NK1/V18/NK4/V2". Der Netzknoten NK4 sendet eine DS-Adressierung mit folgendem Inhalt in Richtung Netzknoten NK1:

"NK4/V2/NK1/V18".

Die Netzknoten vergleichen die aus den beiden Übertragungsrichtungen empfangenen DS-Adressierungen mit dem DSV-Namen, der ihnen mit ihrem Schaltauftrag eingegeben wird.

In Fig. 2 sind die den einzelnen Netzknoten eingegebenen Schaltaufträge angegeben, jedoch ist der Name der DSV: "NK1/V18/NK4/V2", der dazugehört, weggelassen. Fällt irgendwo die Verbindung auS, z.B. zwischen den Netzknoten 1 und 2, und wird, wie in der älteren Anmeldung beschrieben, eine Ersatzschaltung eingerichtet, so bleibt der Name der DSV erhalten (NK1/V18/NK2/V2). Es ändern sich dann nur die an die betroffenen Netzknoten NK1 und NK2 zu gebenden Schaltaufträge. Besteht z.B. eine Verbindung von einem Anschluß 13 von NK1 zu einem Anschluß 7 von NK2, so ergibt sich die Ersatzschaltung, indem der Schaltauftrag V18/2 an NK1 ersetzt wird durch den neuen Schaltauftrag V18/13 und indem der Schaltauftrag 5/23 an NK2 ersetzt wird durch den neuen Schaltauftrag 7/23. Die an die Netzknoten NK2, NK3 und NK4 zu sendende DS-Adressierung NK1/V18/NK4/V2 ändert sich dadurch nicht.

Wenn man davon ausgeht, daß pro Schaltauftrag nur ein DSV-Name mitgegeben wird, nämlich der der zu schaltenden DSV, so ist es erforderlich, zunächst die DSV-en der obersten Hierarchieebene zu schalten und anschließend die darunterliegenden Ebenen. Dies zeigt das folgende Beispiel von Schaltbefehlen zum Netzknoten NK1:
- 140-Mbit/s-Ebene:
"Schalte eine DSV140 mit dem Namen NK1/V18/NK4/V2 von Anschluß V18 nach Anschluß 2."
- 34-Mbit/s-Ebene:
"Schalte eine DSV34 mit dem Namen NK1/V3/NK4/V4 von Anschluß V3 in die Lage 3 der DSV140 an Anschluß V18."
- 2-Mbit/s-Ebene:
"Schalte eine DSV2 mit dem Namen NK1/1/NK4/7 von Anschluß 1 in Lage 1 der DSV34 an Anschluß V3."

Auch in diesem Beispiel sieht man, daß die Anschluß-Adressen auch virtuelle Adressen sein können und daß zum Schaltauftrag immer der Name der zu schaltenden DSV gehört.

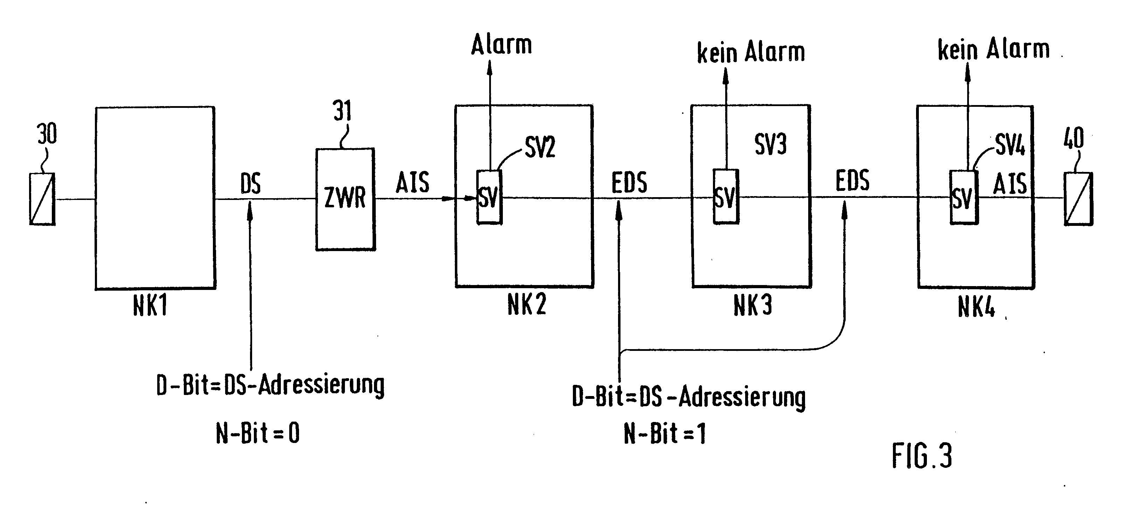

Anhand von Fig. 3 wird nun eine Lösung des oben geschilderten Problems der Unterdrückung von Folgealarmen in Netzknoten bei Ausfall einer DSV erläutert. Die Fig. 3 zeigt vier Netzknoten NK1, NK2, NK3 und NK4, über die eine Digitalsignal-Verbindung, z.B. eine DSV140, die außerhalb des Netzknotens NK1 in einem Multiplexer 30 beginnt und außerhalb des Netzknotens NK4 in einem Multiplexer 40 endet. Die für diese DSV verwendeten Ein- und Ausgangsanschlüsse der Netzknoten spielen hier keine Rolle und sind daher nicht bezeichnet. Die in den Netzknoten vorhandenen Schaltverteiler sind, soweit sie von der dargestellten DSV betroffen sind und für die erfindungsgemäße Lösung eine Rolle spielen, als Bestandteile der Netzknoten dargestellt und mit SV2, SV3 und SV4 bezeichnet.

Wie bei allen existierenden und wahrscheinlich auch allen zukünftigen Übertragungsstrecken sind die innerhalb einer Übertragungsstrecke befindlichen Übertragungseinrichtungen, z.B. Zwischenregeneratoren, dazu eingerichtet, eine Störung oder einen Ausfall des übertragenen Signals zu erkennen und ein Alarmsignal an die nachfolgenden Übertragungseinrichtungen bis zum Ende der Übertragungsstrecke, im vorliegenden Falle bis zum Demultiplexer 40 zu senden. Die Kriterien zum Auslösen eines Alarmsignals sind z.B.: kein Digitalsignal empfangen (bei Kabelbruch), Ausfall der Synchronisierung oder Überschreiten der zulässigen Bitfehlerhäufigkeit. Tritt eine solche Störung innerhalb der Übertragungsstrecke auf, so meldet die dies erkennende Übertragungseinrichtung, im Beispiel der Fig. 3 ein Zwischenregenerator 31, dies durch Aussenden eines Alarmsignals, AIS-Signal genannt (AIS = alarm indication signal) an die nachfolgenden Einrichtungen bis zum Ende der Übertragungsstrecke, d.h. im Beispiel zum Demultiplexer 40. Gleichzeitig gibt die erkennende Übertragungseinrichtung, also der Zwischenregenerator 31, den Alarm an das zur Übertragungsstrecke gehörende Alarmierungssystem ab. Die nachfolgenden Übertragungseinrichtungen, die das AIS empfangen, schalten das AIS transparent durch, geben aber keinen Alarm ab, so daß nur von dort eine Alarmmeldung an das Alarmierungssystem gegeben wird, wo auch der Fehler aufgetreten ist. Ein AIS-Signal ist normalerweise die Aussendung einer Dauer-Eins.

Damit nicht nur, wie üblich, die Übertragungseinrichtungen einen Alarm an ihr Alarmierungssystem abgeben, sondern auch der betroffene Netzknoten einen Alarm an seine eigene Steuerung oder den für ihn zuständigen Netzmanagement-Rechner abgeben kann, ist erfindungsgemäß vorgesehen, daß auch die in den Netzknoten vorhandenen Schaltverteiler ihr Eingangssignal daraufhin überwachen, ob ein AIS vorliegt, und einen Alarm an die Netzknoten-Steuerung oder an den zuständigen Netzmanagement-Rechner abgeben.

Dies geschieht erfindungsgemäß wie folgt: Tritt zwischen dem Netzknoten NK1 und dem Netzknoten NK2 eine Störung oder ein Ausfall der DSV auf, so gibt z.B. der Zwischenregenerator 31 ein AIS an die nachfolgenden Einrichtungen, so daß dieses im Netzknoten NK2 zum Eingang des Schaltverteilers SV2 gelangt. Dieser Schaltverteiler gibt ein Alarmsignal an die Steuerung des Netzknotens NK2 oder an den für ihn zuständigen Management-Rechner ab.

In weiterführender Richtung sendet er aber nicht, wie es bei herkömmlichen Übertragungsstrecken üblich wäre, das AIS weiter, sondern er erzeugt ein Ersatz-Digitalsignal EDS und sendet dieses weiter. Dieses EDS besitzt einen Rahmenaufbau gemäß der CCITT-Norm, wobei die Datenbits auf den Wert "0" gesetzt sind. Ein bestimmtes Bit innerhalb des Rahmens, D-Bit genannt, wird, wie bei der oben angegebenen älteren Anmeldung beschrieben und wie auch anhand von Fig. 2 oben beschrieben, zur Übertragung der Kennung, auch DS-Adressierung genannt, verwendet. Diese Kennung oder DS-Adressierung entspricht der, die bereits in dem vom Netzknoten NK1 ausgesendeten Digitalsignal DS enthalten ist.

Ein weiteres Bit innerhalb des Rahmens, ein sogenanntes N-Bit, wird normalerweise, d.h. im vorliegenden Beispiel, im Netzknoten NK1 gleich "0" gesetzt. Ein Netzknoten (hier NK2), der ein AIS erkannt hat, setzt jedoch dieses N-Bit gleich "1". Der nachfolgende Netzknoten NK3 kann nun, wie oben beschrieben, die Kennung oder DS-Adressierung auswerten und weiterleiten. Er erkennt, daß das N-Bit den Binärwert "1" hat, und er gibt kein Alarmsignal ab. Dies tut auch jeder nachfolgende Netzknoten, der ein solches EDS mit einem Binärwert "1" des N-Bits empfängt.

Im Ziel-Netzknoten NK4 sorgt das empfangene N-Bit mit dem Binärwert "1" ebenfalls dafür, daß der Netzknoten NK4 keinen Alarm abgibt, jedoch wandelt hier der Schaltverteiler SV4 das EDS wieder um in das AIS (Dauer-Eins), das der Demultiplexer 40 als das von der Störung der Digitalsignal-Verbindung betroffene übertragungstechnische Gerät wie bei allen Übertragungsstrecken bekommen muß.

Auf diese Weise ist dafür gesorgt, daß einerseits die für die Überwachung der Schaltung in den Netzknoten notwendige DS-Adressierung oder Kennung auch im Störungsfalle übertragen werden kann und andererseits nur der betroffene Netzknoten, hier NK2, einen Alarm an seine Steuerung oder einen Netzmanagement-Rechner abgibt. Damit ist die Steuerung über den Netzmanagement-Rechner in der Lage, zwischen den Netzknoten NK1 und NK2 eine Ersatzschaltung einzurichten.

Eine Alternative zur Übertragung eines EDS mit einem N-Bit des Binärwerts "1" wie vorstehend geschildert wäre eine Umwandlung des AIS in ein sogenanntes AIS-N durch Umwandlung der Dauer-Eins in eine Dauer-Null. Auch in diesem Falle könnten die dem betroffenen Netzknoten NK2 nachfolgenden Netzknoten feststellen, daß sie keinen Alarm abgeben sollen, und der Ziel-Netzknoten der DSV könnte dieses AIS-N wieder in das normale AIS (Dauer-Eins) umwandeln. Bei dieser Lösung wäre es aber nicht mehr möglich, die DS-Adressierung weiterhin zu übertragen.

Vorteilhaft sind das D- und/oder das N-Bit solche Bits, die auch zur Übertragung von quasistatischen Signalen vorgesehen sind und verwendet werden.

**Ansprüche**

1. Übertragungsnetz mit schaltbaren Netzknoten zum Schalten von Digitalsignal-Verbindungen, wobei die Netzknoten Eingangs- und Ausgangs-Anschlüsse für Digitalsignale haben,
**dadurch gekennzeichnet,**
daß ein an einen Netzknoten (NK1 bis NK4) zu gebender Schaltauftrag besteht aus:
- einer Information über die Bitfolgefrequenz der zu schaltenden Digitalsignal-Verbindung (DSV140),
- einer Information über die intern im Netzknoten zu schaltenden Wege für die zu schaltende Digitalsignal-Verbindung, einschließlich der zu verwendenden Eingangs- und Ausgangsanschlüsse,
- einer Information über den Quell-Netzknoten (NK1) der Verbindung und dessen Eingangsanschluß (V18) und den Ziel-Netzknoten (NK4) und dessen Ausgangsanschluß (V2),
daß im Falle einer Digitalsignal-Verbindung, die innerhalb eines Netzknotens beginnt oder endet, die den Schaltauftrag an diesen Netzknoten gebende Einrichtung statt der Eingangs- oder Ausgangsanschlüsse dieses Netzknotens eine beliebig wählbare Adresse als Bezeichnung eines virtuellen Eingangs- oder Ausgangsanschlusses verwendet und der zu schaltenden Digitalsignal-Verbindung fest zuordnet,
daß der Quell-Netzknoten in das über die Digitalsignal-Verbindung zu übertragende Digitalsignal eine Information einfügt, die die Digitalsignal-Verbindung durch Angabe des Quell-Netzknotens (NK1), dessen reellen oder virtuellen Eingangsschlusses (V18), des Ziel-Netzknotens (NK4) und dessen reellen oder virtuellen Ausgangsanschlusses (V2) bezeichnet,
daß jeder der dem Quell-Netzknoten (NK1) der Digitalsignal-Verbindung (DSV140) im Zuge dieser Verbindung nachfolgenden Netzknoten (NK2 bis NK4) diese Information an den jeweils nachfolgenden Netzknoten bis zum Ziel-Netzknoten weiterleitet, und
daß diese nachfolgenden Netzknoten (NK2, NK3) und der Ziel-Netzknoten (NK4) diese Information mit der entsprechenden Information, die sie von der ihnen ihren Schaltauftrag gebenden Einrichtung erhalten, vergleichen und dadurch die in ihnen geschalteten Wege überprüfen.

2. Übertragungsnetz mit schaltbaren Netzknoten zum Schalten von Digitalsignal-Verbindungen, wobei die Netzknoten Eingangs- und Ausgangsanschlüsse für Digitalsignale haben,
**dadurch gekennzeichnet,**
daß alle Netzknoten (NK1, NK2, NK3, NK4) ihre Eingangs-Digitalsignale daraufhin überwachen, ob sie ein Alarmsignal (AIS) enthalten,
daß ein ein Alarmsignal (AIS) empfangender Netzknoten (NK2)
- einen Alarm an eine zugehörige Steuerung abgibt,
- ein Ersatz-Digitalsignal (EDS) mit vorgegebenem Rahmenaufbau erzeugt und statt des empfangenen Alarmsignals (AIS) weiterleitet,
- in das Ersatz-Digitalsignal an bestimmter Bitposition ein den ausgelösten Alarm anzeigendes Bit (N) einfügt,
daß die das Ersatz-Digitalsignal mit dem den ausgelösten Alarm anzeigenden Bit (N) empfangenden Netzknoten (NK3, NK4) dieses an nachfolgende Netzknoten (NK4) weiterleiten und keinen Alarm mehr auslösen, und
daß der letzte Netzknoten (NK4) der Digitalsignal-Verbindung das empfangene Ersatz-Digitalsignal in das Alarmsignal (AIS) umsetzt.

3. Übertragungsnetz nach Anspruch 2,

dadurch gekennzeichnet, daß die das Ersatz-Digitalsignal weiterleitenden Netzknoten (NK2, NK3) in eine vorgegebene Bitposition Informationen zur Überprüfung der in den Netzknoten geschalteten Wege einfügen.

4. Übertragungsnetz nach Anspruch 3, dadurch gekennzeichnet, daß eines oder beide der bestimmten Bitpositionen solche sind, die auch zum Übertragen von quasistatischen Signalen verwendet werden.

FIG.1

FIG.2

FIG.3